# EUROPÄISCHE PATENTSCHRIFT

(11) **EP 0 468 919 B1**
(45) Veröffentlichungstag und Bekanntmachung des Hinweises auf die Patenterteilung: **06.04.1994**
(21) Anmeldenummer: 91810516.4
(22) Anmeldetag: 02.07.1991
(51) Int. Cl.: F01N 3/28

(54) **Grossdieselmotor**
Large diesel engine
Gros moteur diesel

(30) Priorität: 27.07.1990 CH 2502/90
(43) Veröffentlichungstag der Anmeldung: 29.01.1992
(73) Patentinhaber: NEW SULZER DIESEL AG, CH-8401 Winterthur (CH)
(72) Erfinder: Vollenweider, Jakob, Dr., CH-8400 Winterthur (CH)

(56) Entgegenhaltungen:
- DE-A- 3 830 045
- FR-A- 2 479 323
- US-A- 3 966 443
- PATENT ABSTRACTS OF JAPAN vol. 9, no. 317 (C-319) 12 Dezember 1985,& JP-A-60 153922 (HISAO KOJIMA) 13 August 1985
- PATENT ABSTRACTS OF JAPAN vol. 12, no. 478 (M-775) 14 Dezember 1988,& JP-A-63 198713 (HINO MOTORS LTD) 17 August 1988
- WO 83/00057

## Beschreibung

Die Erfindung bezieht sich auf einen Grossdieselmotor mit den Merkmalen des Oberbegriffs des Anspruchs 1.

Die weltweite Verschärfung von Umweltschutzauflagen bringt es mit sich, dass auch bei Grossdieselmotoren, wie sie z.B. zum Antrieb von Tankern verwendet werden, Massnahmen getroffen werden müssen, um den Schadstoffausstoss zu reduzieren, insbesondere den von Stickoxiden. Eine solche, hauptsächlich zur Entstickung der Abgase von Verbrennungsöfen, angewendete Massnahme besteht in der sogenannten selektiven katalytischen Reduktion (SCR), wobei die Stickoxide mit Ammoniak oder einem Ammoniakträger katalytisch zu Stickstoff und Wasser reduziert werden. Ein wesentliches Problem des SCR-Verfahrens ist der beträchtliche Raumbedarf für die handelsüblichen Katalysatoren. Bei einer Anwendung des SCR-Verfahrens in einem Dieselmotor ist gemäss der PCT-Anmeldung WO 83/00057 der Katalysator in Form eines Bettes in einem Reaktor angeordnet, der in die Abgasleitung eingebaut ist, die in die Atmosphäre mündet. Dabei findet der Entstickungsprozess bei Atmosphärendruck statt und wegen des beträchtlichen Raumbedarfs für den Katalysator ist der Durchmesser des Reaktors gegenüber dem der Abgasleitung erweitert. Insbesondere in Fällen, in denen der Dieselmotor als Antrieb für grosse Schiffe dient, können Platzprobleme bei der Anordnung des Reaktors entstehen.

Der Erfindung liegt die Aufgabe zugrunde, einen Grossdieselmotor der eingangs genannten Art dahingehend zu verbessern, dass der Ausstoss an Stickoxiden stark verringert wird und gleichzeitig kein zusätzlicher Raum ausserhalb des Motors für die Unterbringung des Katalysators nötig ist.

Diese Aufgabe wird erfindungsgemäss durch die Merkmale des Kennzeichens des Anspruchs 1 gelöst. Dadurch dass die Abgasleitung in die Abgasturbine mündet, steht der von den Zylindern kommende Abgasstrom unter einem höheren Druck als Atmosphärendruck und auch der Entstickungsprozess findet unter diesem erhöhten Druck statt. Es wurde nun gefunden, dass zusammen mit der Verwendung eines Katalysators in Form eines statischen Mischers der Raumbedarf für diesen nur so gross ist, dass er im Auspuffsammelrohr untergebracht werden kann. Damit wird kein zusätzlicher Raum für die Unterbringung des Katalysators benötigt und die Abgasleitung kann ebenfalls die übliche Abmessung beibehalten. Der den Motor umgebende Nutzraum wird also nicht beeinträchtigt.

Ein Ausführungsbeispiel der Erfindung ist in der folgenden Beschreibung anhand der Zeichnung näher erläutert. Es zeigen:
- Fig. 1: schematisch eine Seitenansicht eines Grossdieselmotors,
- Fig. 2: schematisch eine Vorderansicht des oberen Teils des Grossdieselmotors nach Fig. 1,
- Fig. 3: schematisch einen Horizontalschnitt durch das Auspuffsammelrohr mit darin angeordnetem Katalysator,
- Fig. 4: ein vergrössertes Detail aus Fig. 3 im Bereich eines Stützringes,
- Fig. 5: eine Teilansicht des Details nach Fig. 4,
- Fig. 6: eine Teilansicht eines Stützringes mit Reduktionsmittelzufuhrvorrichtung,
- Fig. 7: eine Einspritzdüse der Reduktionsmittelzufuhrvorrichtung nach Fig. 6,
- Fig. 8: eine perspektivische Darstellung der Katalysatorstruktur und
- Fig. 9: einen Axialschnitt durch eine gegenüber Fig. 6 und 7 abgewandelte Reduktionsmittelzufuhrvorrichtung.

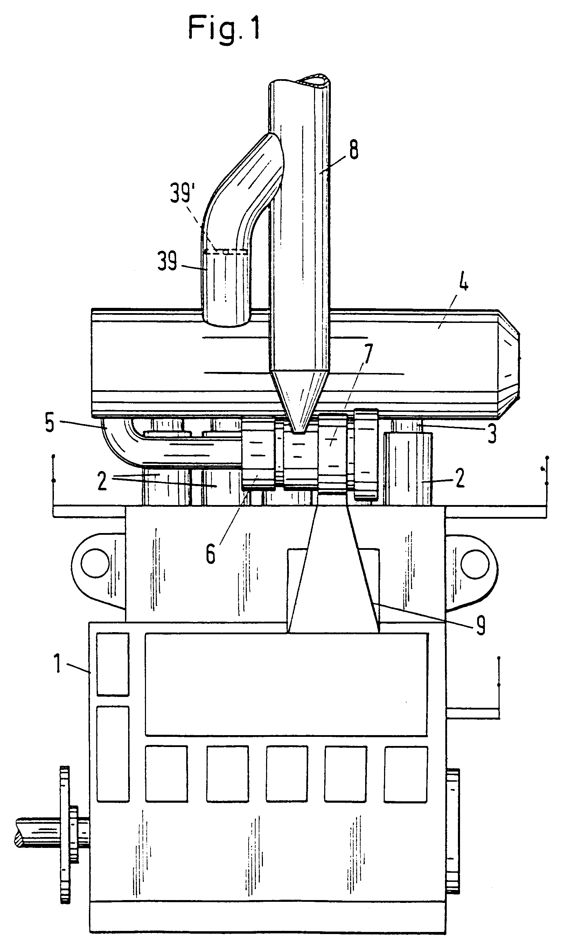

Gemäss Fig. 1 weist ein langsamlaufender 2-Takt-Grossdieselmotor 1 an sich bekannter Bauart mehrere, z.B. fünf, in einer Reihe liegende Zylinder 2 auf, die über je ein Auspuffrohr 3 in ein gemeinsames Auspuffsammelrohr 4 münden. Das runden Querschnitt aufweisende Auspuffsammelrohr 4 ist mit horizontaler Zylinderachse oberhalb der Zylinder 2 angeordnet und die Auspuffrohre 3 münden - über die Länge des Sammelrohres 4 verteilt - tangential in das Sammelrohr 4. Nahe dem in Fig. 1 linken Ende des Sammelrohres 4 zweigt eine Leitung 5 ab, die zu einer Abgasturbine 6 führt, die einen Ladeluftkompressor 7 direkt antreibt. Zwischen der Abgasturbine 6 und dem Ladeluftkompressor 7 ist am Turbinengehäuse ein Kaminrohr 8 angeschlossen, über das das in der Abgasturbine 6 entspannte Gas in die Atmosphäre entweicht. In Fig. 1 unterhalb des Ladeluftkompressors 7 ist ein Ladeluftkühler 9 vorgesehen, über den die komprimierte Frischluft in nicht näher dargestellter Weise den unteren Enden der Zylinder 2 zugeführt wird.

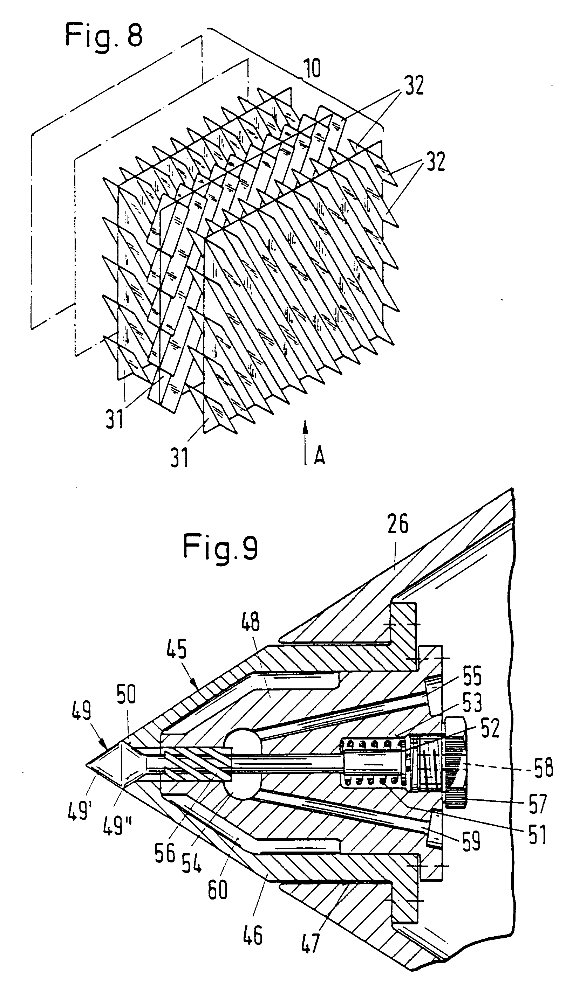

Erfindungsgemäss ist im Auspuffsammelrohr 4 ein Katalysator 10 angeordnet, der unter Freilassung eines Ringraums 11 das Zentrum des Sammelrohrquerschnitts ausfüllt und sich ausserdem über einen wesentlichen Teil der Länge des Sammelrohres 4 erstreckt. Die Struktur des Katalysators 10 entspricht der eines statischen Mischers und ist beispielsweise in Fig. 8 dargestellt. Der Katalysator besteht aus mehreren vertikalen, mit katalytischem Material beschichteten Blechen 31 mit zueinander parallelen, zur vertikalen geneigten Leitelementen 32, die rechtwinklig auf den Blechen 31 aufgeschweisst sind. Die Bleche 31 sind nebeneinander abwechselnd so angeordnet, dass die Leitelemente 32 sich kreuzen. Dadurch wird das in Richtung des Pfeiles A den Katalysator durchströmende Abgas in viele sich unter ca. 90° kreuzende Teilströme aufgeteilt. Mehrere Bleche 31 werden jeweils zu einem Paket aufeinandergestapelt und mehrere solcher Pakete werden in Gasströmungsrichtung hintereinander im Sammelrohr 4 angeordnet. Die Gesamtheit der Katalysatorpakete, die - abweichend von der Darstellung in Fig. 8 - in Richtung des Pfeiles A gesehen einen runden Umriss haben, ist von einem zylindrischen Rohr 12 umgeben, das den Ringraum 11 auf dessen Innenseite begrenzt.

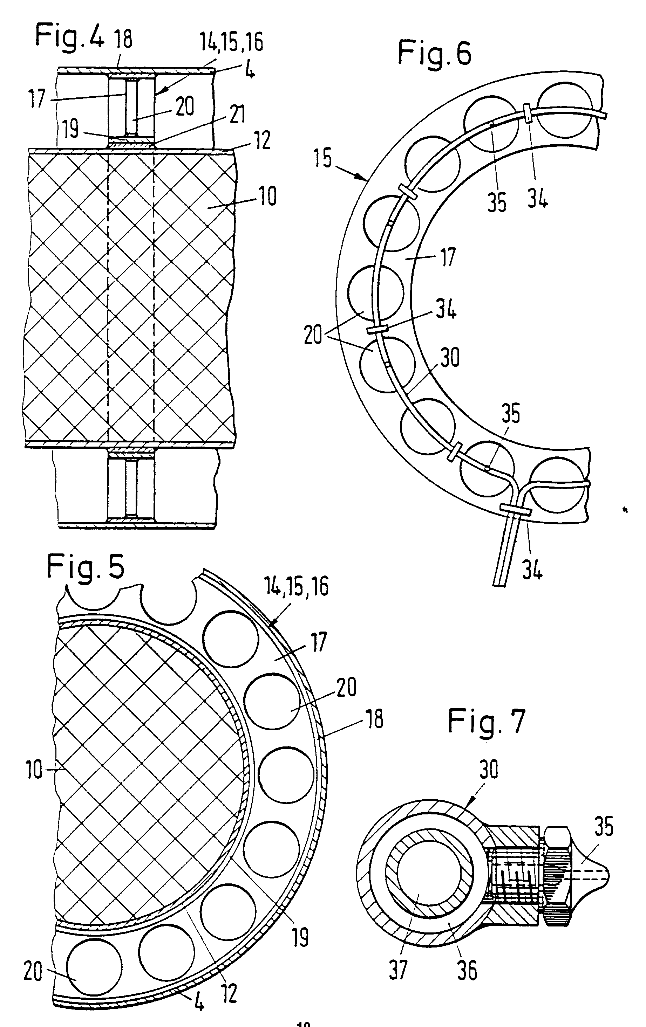

Das Rohr 12 mit dem darin befindlichen Katalysator 10 ist an vier über die Länge des Rohres 12 verteilten Stellen im Sammelrohr 4 gehalten. An den beiden mittleren Stellen ist je ein Stützring 14 und 15 angeordnet. Die Stützringe sind unter sich gleich ausgebildet und bestehen - wie Fig. 4 und 5 zeigen - aus einer Ringscheibe 17 sowie einem mit dieser verschweissten Aussenring 18 und einem mit dieser ebenfalls verschweissten Innenring 19. Die Ringscheibe 17 enthält zahlreiche über die Scheibenfläche verteilte runde Durchbrechungen 20, über die die Gasströmung im Ringraum 11 ermöglicht wird. Der Aussenring 18 ist mit dem Sammelrohr 4 verschweisst, wogegen der Innenring 19 sich auf einem am Rohr 12 angeschweissten Gleitring 21 axial verschieben kann.

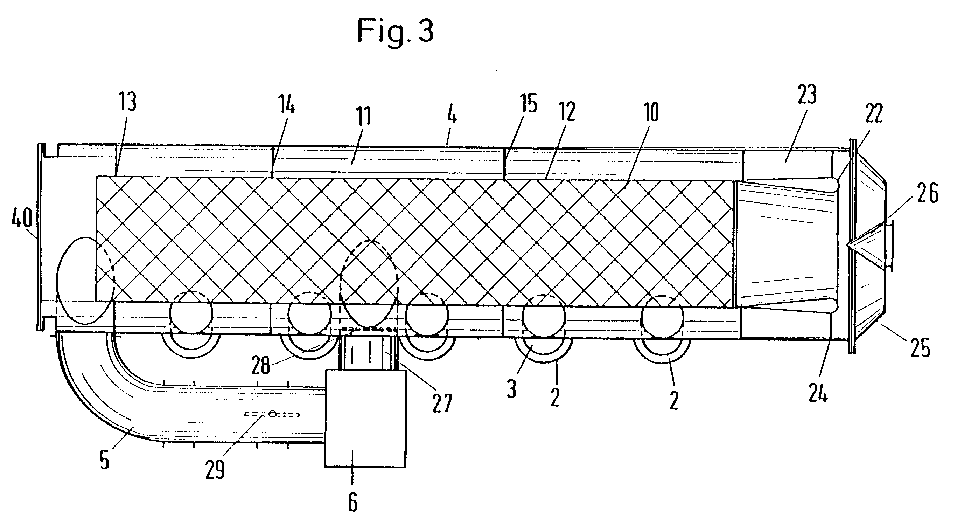

An der in Fig. 3 linken Stelle des Rohres 12 ist zu dessen Halterung ein Stützring 13 vorgesehen, der als geschlossene Ringscheibe, d.h. ohne Durchbrüche, ausgebildet ist. Diese Ringscheibe ist sowohl an ihrem äusseren Umfang als auch an ihrem inneren Umfang mit dem Sammelrohr 4 bzw. dem Rohr 12 verschweisst, so dass keine Gasströmung vom Ringraum 11 über den Stützring 13 nach links stattfinden kann. Das in Fig. 3 linke Ende des Sammelrohres 4 ist durch einen lösbar mit ihm verbundenen Deckel 40 verschlossen.

Die vierte Halterungsstelle für das Rohr 12 ist an dessem in Fig. 3 rechten Ende in Form eines Strömungsleitringes 22 vorgesehen. Der Strömungsleitring 22 schliesst sich am rechten Ende des Rohres 12 an und ist auf seiner Aussenseite mit mehreren, über den Umfang verteilten, drallneutralisierenden Schaufeln 23 versehen. Die aus entsprechend gebogenem Blech bestehenden Schaufeln 23 sind mit ihrer inneren Längskante mit dem Leitring 22 und mit ihrer äusseren Längskante mit einem im Sammelrohr 4 sich abstützenden Ring 24 verschweisst, der an seinem in Fig. 3 rechten Ende in einen nach aussen ragenden Flansch übergeht. Der Leitring 22, die Schaufeln 23 und der Aussenring 24 bilden auf diese Weise eine in das Sammelrohr 4 einsetzbare Baueinheit. Der Leitring 22 ragt mit seinem in Fig. 3 linken Ende etwas in das Rohr 12 hinein und ist auf seiner Innenseite zu diesem Ende hin diffusorartig erweitert. Das Sammelrohr 4 ist an seinem in Fig. 3 rechten Ende von einem Deckel 25 überspannt, der in seinem Zentrum einen sich zum Leitring 22 hin verjüngenden Leitkegel 26 aufweist. Der Deckel 25 ist über eine Flanschverbindung lösbar mit dem Sammelrohr 4 verbunden, wobei zwischen den Flanschen der Flansch des Rohres 24 eingeklemmt wird.

Zwecks Zufuhr des Reduktionsmittels, z.B. in Wasser gelöster Harnstoff, ist gemäss Fig. 6 eine Ringleitung 30 vorgesehen, die mit Hilfe von Rohrschellen 34 an der Ringscheibe 17 des Stützrings 15 befestigt ist. Die Ringleitung 30 ist auf der der Gasströmung abgewendeten Seite der Ringscheibe 17 angeordnet und verläuft etwa in der Mitte von deren Durchbrüchen 20. In der Ringleitung 30 sind gleichmässig über den Umfang der Ringscheibe 17 verteilt Düsen 35 vorgesehen, die das Reduktionsmittel in Gasströmungsrichtung austreten lassen. Im Beispiel nach Fig. 6 ist an jedem zweiten Durchbruch eine Düse 35 vorgesehen.

Gemäss Fig. 7 ist die Ringleitung 30 doppelwandig ausgebildet, so dass sie einen Ringraum 36 und einen Innenraum 37 aufweist. Der Ringraum 36 ist in nicht dargestellter Weise mit einer Quelle für das Reduktionsmittel und der Innenraum 37 ebenfalls in nicht dargestellter Weise mit einer Kühlwasserzufuhr verbunden.

Die beschriebene Einrichtung funktioniert folgendermassen:

Das in den Zylindern 2 entstehende Abgas tritt über die Auspuffrohre 3 in den Ringraum 11 des Auspuffsammelrohres 4. Es strömt dann drallartig in Fig. 3 nach rechts zum Strömungsleitring 22, wo seine Drallströmung mittels der Schaufeln 23 neutralisiert oder gleichgerichtet wird. Das Abgas wird dann in den vom Deckel 25 begrenzten Raum - unterstützt vom Leitkegel 26 - in den vom Leitring 22 umgebenen Diffusorraum umgelenkt, wonach es den Katalysator 10 durchströmt. Mit Hilfe des am Stützring 15 über die Ringleitung 30 zugeführten Reduktionsmittels findet im Katalysator die an sich bekannte Umwandlung des Stickoxids in Stickstoff und Wasserdampf statt. Das so vom Stickoxid weitgehendst befreite Abgas gelangt über die Leitung 5 zur Abgasturbine 6, in der die Enthalpie des Abgases in bekannter Weise ausgenützt wird, um dem Motor 1 Frischluft unter erhöhtem Druck zuzuführen.

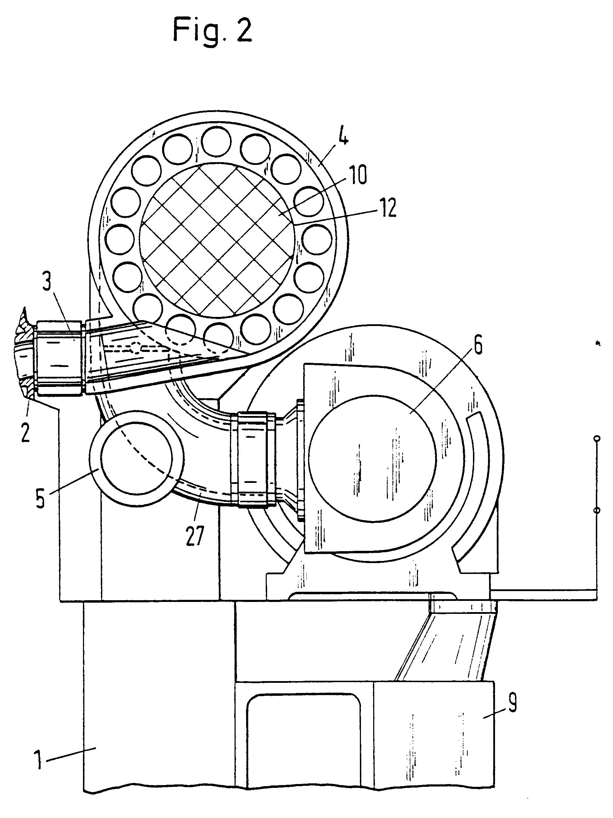

Wie Fig. 2 und 3 zeigen, ist am Auspuffsammelrohr 4 eine Leitung 27 angeschlossen, die in die Abgasturbine 6 mündet und die mit einer verstellbaren Klappe 28 versehen ist (Fig. 3). Auch die Leitung 5 weist eine verstellbare Klappe 29 auf. Mit Hilfe der Klappen 28 und 29 ist es möglich, das Abgas am Katalysator 10 vorbeizuführen, indem durch Oeffnen der Klappe 28 und Schliessen der Klappe 29 das Abgas aus dem Ringraum 11 direkt zur Abgasturbine 6 geleitet wird. Während dieses Katalysator-Bypassbetriebes kann durch den Ringraum 36 der Ringleitung 30 anstelle des Reduktionsmittels Luft oder Wasser gefördert werden, um sicherzustellen, dass einerseits die Umwelt nicht mit Dämpfen von nicht zur Reaktion gelangtem Reduktionsmittel belastet wird und andererseits die Düsen 35 nicht verstopfen.

Um auch die Möglichkeit zu haben, das Abgas zusätzlich an der Abgasturbine 6 vorbeizuführen, ist gemäss Fig. 1 am Auspuffsammelrohr 4 eine mit einer Klappe 39' versehene Leitung 39 angeschlossen, die in das Kaminrohr 8 mündet. Im Falle eines Betriebs ohne Abgasturbine werden also die Klappe 39' geöffnet und die beiden Klappen 28 und 29 geschlossen, so dass dann das Abgas aus dem Ringraum 11 über die Leitung 39 direkt in das Kaminrohr 8 gelangt.

Beim Ausführungsbeispiel gemäss Fig. 9 geschieht das Zuführen des Reduktionsmittels durch eine einzige Düse 45, die in der Spitze des Leitkegels 26 angebracht ist. Die Düse 45 weist ein Gehäuse 46 auf, das mit einem zylindrischen Abschnitt in einer Bohrung 47 des Leitkegels 26 ruht und das mit einem kegeligen Abschnitt die Fortsetzung der äusseren Kegelfläche des Kegels 26 bildet. Im Gehäuse 46 ist ein Einsatzkörper 48 angeordnet, in dessen Zentrum ein nadelartiges Verschlussstück 49 axial beweglich geführt ist. Das Verschlussstück 49 ist an seinem in Fig. 9 linken Ende als Doppelkegel ausgebildet, wobei der in Fig. 9 linke Kegel 49' in der gezeichneten Schliessstellung die Verlängerung der äusseren Kegelfläche des Gehäuses 46 bildet, wogegen der andere Kegel 49'' eine Dichtfläche bildet, die mit einer entsprechend kegeligen Sitzfläche 50 im Gehäuse 46 zusammenwirkt. Um den Verschlussteil 49 in der gezeichneten Schliessstellung zu halten, ist an seinem dem Doppelkegel abgewendeten Ende eine Schraubenfeder 51 vorgesehen, die sich zwischen einen am Verschlussteil befestigten Teller 52 und einer Bohrung 53 im Einsatzkörper 48 erstreckt. Zwischen dem Doppelkegel des Verschlussteils 49 und der Schraubenfeder 51 ist im Einsatzkörper 48 ein Ringraum 54 ausgespart, dem über eine Bohrung 55 Reduktionsmittel zugeführt wird. Zwischen dem Ringraum 54 und dem Doppelkegel des Verschlussteils 49 sind an diesem trapezgewindeartige Rippen 56 vorgesehen, die dem Reduktionsmittel in der Offenstellung des Verschlussteils eine Drallbewegung erteilen. In die Bohrung 53 ist eine Verschlussschraube 57 eingeschraubt, die mit einer zentralen Bohrung 58 versehen ist, die zur Abfuhr von Leckage dient, die zwischen dem Verschlussteil 49 und der umgebenden Führungsbohrung im Einsatzkörper 48 entstehen kann.

Im Einsatzkörper 48 ist noch eine Bohrung 59 vorgesehen, die zum Ringraum 54 führt und über die ein Spülmittel, z.B. Wasser, zugeführt werden kann. Hierdurch wird verhindert, dass während der Abstellphase der Düse 45 in deren verschiedenen Spalträumen Reduktionsmittel kristallisiert, wodurch die Bewegung des Verschlussteils 49 blockiert würde. Zwischen dem Einsatzkörper 48 und dem Gehäuse 46 ist ein Ringraum 60 vorgesehen, durch den in nicht dargestellter Weise Kühlwasser gefördert werden kann.

Im Betrieb der Düse 45 wird durch den Druck des über die Bohrung 55 zugeführten Reduktionsmittels der Verschlussteil 49 in öffnendem Sinne verschoben, wodurch drallbehaftetes Reduktionsmittel in die am Leitring 22 (Fig. 3) umgelenkte Gasströmung eintritt und sich mit dem Abgas mischt, bevor die Mischung in den Katalysator 10 eintritt.

Der beschriebene Grossdieselmotor ist sowohl für Schiffsantriebe als auch den Antrieb von elektrischen Generatoren in stationären Dieselkraftanlagen verwendbar.

## Patentansprüche

1. Grossdieselmotor (1) mit mehreren Zylindern (2) und einem an diesen angeschlossenen Auspuffsammelrohr (4), an dem eine Abgasleitung (5) angeschlossen ist, sowie mit einem Katalysator (10) zum Entfernen von Stickoxyden aus dem von den Zylindern (2) kommenden Abgas und mit einer Reduktionsmittelzufuhr (30) vor dem Eintritt des Abgases in den Katalysator, dadurch gekennzeichnet, dass im Auspuffsammelrohr (4) ein Rohr (12) angeordnet ist, dass zwischen dem Rohr (12) und dem Auspuffsammelrohr (4) ein vom Abgas durchströmter Ringraum (11) freigelassen ist, dass der Katalysator (10) in Form eines statischen Mischers im Rohr (12) angeordnet ist und dass die Abgasleitung (5) in eine Abgasturbine (6) mündet, die einen Ladeluftkompressor (7) antreibt.

2. Motor nach Anspruch 1, dadurch gekennzeichnet, dass im Auspuffsammelrohr (4) fluchtend zu dem Rohr (12) ein Leitring (22) angeordnet ist.

3. Motor nach Anspruch 2, dadurch gekennzeichnet, dass der Leitring (22) innen sich in Strömungsrichtung des Abgases diffusorartig erweitert.

4. Motor nach Anspruch 2 oder 3, dadurch gekennzeichnet, dass der Leitring (22) aussen mit Schaufeln (23) versehen ist, die einen Drall des vom Ringraum (11) kommenden Abgases derart neutralisieren, dass das Abgas im wesentlichen parallel zur Längsachse des Auspuffsammelrohres (4) weiterströmt.

5. Motor nach Anspruch 4, dadurch gekennzeichnet, dass die Schaufeln (23) aussen an einem sie umgebenden Ring (24) befestigt sind, der zusammen mit den Schaufeln (23) und dem Leitring (22) eine Baueinheit bildet.

6. Motor nach Anspruch 2, dadurch gekennzeichnet, dass das Auspuffsammelrohr (4) im Bereich des Leitringes (22) mit einem lösbaren Deckel (25) verschlossen ist, der mit seiner Innenfläche den aus dem Ringraum (11) austretenden Gasstrom in den Leitring (22) umlenkt.

7. Motor nach Anspruch 6, dadurch gekennzeichnet, dass im Zentrum des Deckels (25) auf dessen Innenseite ein gegen den Leitring sich verjüngender Leitkegel (26) vorgesehen ist.

8. Motor nach einem der Ansprüche 1 bis 7, dadurch gekennzeichnet, dass als Reduktionsmittelzufuhr im Ringraum eine Ringleitung (30) vorgesehen ist, die mehrere über ihren Umfang verteilte Düsen (35) aufweist.

9. Motor nach Anspruch 8, dadurch gekennzeichnet, dass die Ringleitung (30) doppelwandig ausgebildet ist und der äussere ringförmige Raum (36) der Ringleitung das Reduktionsmittel führt, wogegen der innere Raum (37) der Ringleitung (30) mit einer Kühlmittelzufuhr in Verbindung steht.

10. Motor nach Anspruch 6, dadurch gekennzeichnet, dass die Reduktionsmittelzufuhr im Zentrum des Deckels (25) vorgesehen ist.

11. Motor nach den Ansprüchen 7 und 10, dadurch gekennzeichnet, dass im Leitkegel (26) des Deckels (25) ein die Zufuhr des Reduktionsmittels steuerndes Ventil (49, 50) vorgesehen ist.

## Claims

1. A large diesel engine (1) comprising a number of cylinders (2) and an exhaust manifold (4) connected thereto, whereby an exhaust line (5) is connected to the exhaust manifold, and whereby a catalyst (10) is provided in order to remove nitrogen oxides from the exhaust gas coming from the cylinders and a supply (30) of reducing agent is disposed in front of the place where the exhaust gas enters the catalyst, characterised in that in the exhaust manifold (4) is disposed a tube (12), that an annular space (11) is left free between said tube (12) and said exhaust manifold (4) which annular space is through-flowed by the exhaust gas, that the catalyst (10) in the form of a static mixer is disposed in said tube (12) and that the exhaust line (5) leads to an exhaust gas turbine (6) which drives a supercharger (7).

2. An engine according to claim 1, characterised in that a guide ring (22) in line with the tube (12) is disposed in the exhaust manifold (4).

3. An engine according to claim 2, characterised in that the guide ring (22) widens internally in the form of a diffuser in the direction of flow of the exhaust gas.

4. An engine according to claim 2 or 3, characterised in that the guide ring (22) has external blades (23) which neutralise the twist of the exhaust gas coming from the annular space (11) in such kind that the exhaust gas subsequently flows substantially parallel to the longitudinal axis of the exhaust manifold (4).

5. An engine according to claim 4, characterised in that the blades (23) are externally fastened to a ring (24) which surrounds them and which together with the blades (23) and guide ring (22) forms a structural unit.

6. An engine according to claim 2, characterised in that in the region of the guide ring (22) the exhaust manifold (4) is closed by a releasable cover (25) having an inner surface by means of which the gas flowing out of the annular space (11) is guided into the guide ring (22).

7. An engine according to claim 6, characterised in that a guide cone (26) tapering towards the guide ring is provided in the centre of the cover (25) on the inside thereof.

8. An engine according to any of claims 1 - 7, characterised in that a ring conduit (30) having a number of peripherally distributed nozzles (35) is provided in the annular space as a reducing agent supply.

9. An engine according to claim 8, characterised in that the ring conduit (30) is double-walled and the outer annular chamber (36) in the ring conduit conveys the reducing agent whereas the inner chamber (37) in the ring conduit (30) is connected to a coolant supply.

10. An engine according to claim 6, characterised in that the reducing agent supply is provided at the centre of the cover (25).

11. An engine according to claims 7 and 10, characterised in that a valve (49, 50) controlling the supply of reducing agent is provided in the guide cone (26) of the cover (25).

## Revendications

1. Grand moteur diesel (1) à plusieurs cylindres (2) et à tuyau collecteur d'échappement (4) raccordé à ces derniers et auquel un conduit (5) des gaz d'échappement est raccordé, ainsi qu'à catalyseur (10) d'élimination des oxydes d'azote des gaz d'échappement provenant des cylindres (2) et à apport (30) d'agent réducteur en amont de l'entrée des gaz d'échappement dans le catalyseur, caractérisé en ce qu'un tube (12) est disposé dans le tuyau collecteur d'échappement (4), un espace annulaire (11) dans lequel circulent les gaz d'échappement est ménagé entre le tube (12) et le tuyau collecteur des gaz d'échappement (4), en ce que le catalyseur (10) a la forme d'un mélangeur statique qui est disposé dans le tube (12) et en ce que le conduit (5) des gaz d'échappement débouche dans une turbine à gaz d'échappement (6) qui commande un compresseur d'air de suralimentation (7).

2. Moteur selon la revendication 1, caractérisé en ce qu'une couronne directrice (22) est disposée dans le tuyau collecteur d'échappement (4) à l'alignement du tube (12).

3. Moteur selon la revendication 2, caractérisé en ce que la couronne directrice (22) s'élargit intérieurement en diffuseur dans le sens de la circulation des gaz d'échappement.

4. Moteur selon la revendication 2 ou 3, caractérisé en ce que la couronne directrice (22) est équipée extérieurement d'aubes (23) qui neutralisent un mouvement giratoire des gaz d'échappement provenant de l'espace annulaire (11) de manière que les gaz d'échappement poursuivent leur circulation sensiblement parallèlement à l'axe longitudinal du tuyau collecteur d'échappement (4).

5. Moteur selon la revendication 4, caractérisé en ce que les aubes (23) sont fixées extérieurement à un anneau (24) qui les entoure et qui forme un module avec les aubes (23) et la couronne directrice (22).

6. Moteur selon la revendication 2, caractérisé en ce que le tuyau collecteur d'échappement (4) est obturé dans la région de la couronne directrice (22) par un couvercle amovible (25) dont la surface intérieure dévie le flux gazeux sortant de l'espace annulaire (11) dans la couronne directrice (22).

7. Moteur selon la revendication 6, caractérisé en ce qu'un cône de guidage (26) se rétrécissant vers la couronne directrice est prévu sur le côté intérieur et au centre du couvercle (25).

8. Moteur selon l'une des revendications 1 à 7, caractérisé en ce qu'un conduit annulaire (30) d'apport d'agent réducteur qui est prévu dans l'espace annulaire comprend plusieurs buses (35) réparties à sa circonférence.

9. Moteur selon la revendication 8, caractérisé en ce que le conduit annulaire (30) est à cloison double et l'espace annulaire extérieur (36) du conduit annulaire fait passer l'agent réducteur, tandis que l'espace intérieur (37) du conduit annulaire (30) communique avec une arrivée d'agent réfrigérant.

10. Moteur selon la revendication 6, caractérisé en ce que l'arrivée d'agent réducteur est prévue au centre du couvercle (25).

11. Moteur selon les revendications 7 et 10, caractérisé en ce qu'une soupape (49, 50) de commande de l'arrivée de l'agent réducteur est prévue dans le cône de guidage (26) du couvercle (25).
